# EUROPÄISCHE PATENTSCHRIFT

(11) **EP 0 374 443 B1**
(45) Veröffentlichungstag und Bekanntmachung des Hinweises auf die Patenterteilung: **24.08.1994**
(21) Anmeldenummer: 89120328.3
(22) Anmeldetag: 03.11.1989
(51) Int. Cl.: B01D 3/00, B01J 19/32

(54) **Vorrichtung zum Tragen von Füllkörpern und zum Sammeln oder Verteilen von Flüssigkeit in einem Stoff- oder Wärmeaustauschbehälter**
Device for carrying a packing and for collecting or distibuting a liquid in a mass or heat exchange transfer vessel
Dispositif pour porter des élements de remplissage et pour collecter ou distribuer des liquides dans un récipient échangeur de chaleur ou de masse

(30) Priorität: 18.12.1988 DE 3842637
(43) Veröffentlichungstag der Anmeldung: 27.06.1990
(73) Patentinhaber: Paul Rauschert GmbH & Co. KG, D-96329 Pressig (DE)
(72) Erfinder: Geipel, Werner,, D-8645 Steinwiesen (DE); Maier, Karl-Heinz,, D-8640 Kronach (DE)
(74) Vertreter: Weber, Dieter, Dr.

(56) Entgegenhaltungen:
- EP-A- 0 013 284
- DE-A- 2 516 078
- DE-C- 492 071
- DE-C- 600 363
- US-A- 4 521 350

## Beschreibung

In Stoff- und Wärmeaustauschkolonnen ist es üblich, die aus Schüttungen, wie solchen von Füllkörpern, ablaufende Flüssigkeit auf einem Sammelboden zu sammeln und von diesem aus der Kolonne abzuführen. Auch ist es bekannt, in solchen Stoff- und Wärmeaustauschkolonnen eine Wiederverteilung der gesammelten Flüssigkeit über einer zweiten, unter der ersten liegenden Schüttung vorzunehmen. Hierzu verwendet man einen Verteilerboden, der aus parallelen Rinnen mit seitlichen Austrittsöffnungen bestehen kann. In beiden Fällen liegt die Schüttung über dem Sammel- bzw. Verteilerboden, wozu es erforderlich ist, einen Tragrost zu verwenden, der verhindert, daß die Schüttung in den Sammel- oder Verteilerboden bzw. die Sammel- oder Verteilerrinnen gelangt. Bekanntermaßen bestehen die Sammel- oder Verteilerböden einerseits und die Tragroste für die Abstützung der Schüttung, wie einer Schüttung aus Füllkörpern, oder für regelmäßig zusammengesetzte Füllkörper andererseits aus getrennten Bauteilen.

Die Verwendung getrennter Bauteile hierfür ergibt große erforderliche Bauhöhen, was umgekehrt die Schütthöhe in der Stoff- oder Wärmeaustauschkolonnen vorgegebener Abmessungen vermindert. Außerdem ergeben die bekanntermaßen verwendeten getrennten Bauteile erhöhte gasseitige Druckverluste durch mehrfache Umlenkung der Gasströmung, eine relativ hohe Durchregenrate oder hohe Durchtropfmengen sowie eine relativ umständliche Montage in der Kolonne.

Es ist erwünscht, die Fallwege von Flüssigkeitstropfen in der Kolonne möglichst gering zu halten, da große Fallwege zum Zerplatzen der Tropfen führen und kleinere Sekundärtropfen erzeugen, die mit der aufwärtsgerichteten Gasströmung wieder in die Füllkörperschüttung eingetragen werden.

Die US-A-4 521 350 zeigt eine Vorrichtung zum Sammeln von Flüssigkeit in einem Stoff- oder Wärmeaustauschbehälter, die zum Tragen von Füllkörpern geeignet ist und die wenigstens eine Rinne zum Sammeln von Flüssigkeit aufweist und je Rinne wenigstens eine im wesentlichen parallel zu ihr, schräg zu einer ersten Ebene, die durch die Symmetrieebene der Rinne gebildet wird, angeordnete Ableitplatte und Träger, die die Rinne mit der Ableitplatte verbinden und letztere in ihrer Lage fixieren, hat, wobei die Unterkante der Ableitplatte, deren unteres Ende in oder unmittelbar über der Rinnenöffnung angeordnet ist, in die Rinnenöffnung hineinragt und wobei die Oberkante dieser Ableitplatte über eine zweite Ebene hinausragt, die prallel zu ersten Ebene liegt und durch eine der freien Kanten der Rinne geht.

Die der Erfindung zugrundeliegende Aufgabe bestand darin, die geschilderten Nachteile bekannter Vorrichtungen zum Sammeln oder Verteilen von Flüssigkeit in einem Stoff- oder Wärmeaustauschbehälter zu vermeiden. Insbesondere soll der Einbau in die Kolonne erleichtert und/oder die erforderliche Einbauhöhe vermindert und/oder der gasseitige Druckverlust vermindert und/oder die Durchregenrate möglichst klein gehalten werden.

Diese Aufgabe wird mit einer Vorrichtung mit den Merkmalen des Anspruches 1 gelöst.

Es handelt sich also beim Erfindungsgegenstand um ein kombiniertes Bauteil, in welchem der Füllkörpertragrost und der Sammel- oder Verteilerboden in Form von parallel zueinander liegenden Rinnen eine Einheit bilden und als Ganzes in eine Stoff- oder Wärmeaustauschkolonne eingesetzt werden können. Die erfindungsgemäßen kombinierten Bauteile werden komplett vormontiert und durch Mannlöcher in die Kolonnen eingeführt, wo sie nur noch verschraubt oder anderweitig befestigt werden müssen. Da es sich bei Stoff- und Wärmeaustauschkolonnen im Regelfall um solche mit rundem Querschnitt handelt, werden die erfindungsgemäßen kombinierten Bauteile, die in Standardgrößen hergestellt werden, an den Enden rund geschnitten, um in die Kolonne zu passen. Da die Bauteile nach der Erfindung im Regelfall aus einem Kunststoffmaterial bestehen, ist dieses Rundschneiden eine einfache Tätigkeit. Wenn die Bauteile von vornherein dimensionsmäßig dem Kolonnenquerschnitt angepaßt werden, können sie natürlich auch aus anderen Werkstoffen, wie Metallen, bestehen.

Wie erwähnt, können die erfindungsgemäßen Vorrichtungen entweder zum Sammeln oder zum Wiederverteilen von Flüssigkeit in einer Kolonne benutzt werden. Im ersteren Fall sind die Rinnen vollwandig ausgebildet, so daß keine Flüssigkeit durch die Wände hindurch austreten kann. Im Falle einer beabsichtigten Wiederverteilung haben die Rinnen seitliche Öffnungen, durch die die Flüssigkeit gleichmäßig über den Querschnitt der Kolonne verteilt wird. Solche Verteilerrinnen sind in verschiedenen Ausführungsformen an sich bekannt und können alle in den Erfindungsgegenstand integriert werden.

Die erfindungsgemäßen Vorrichtungen haben gegenüber bekannten separat verwendeten Bauteilen den Vorteil, daß sie leicht montiert werden können, daß sie eine geringere Einbauhöhe ergeben und damit größere Schütthöhen in vorgegebenen Kolonnen ermöglichen, daß sie zu reduziertem Druckverlust, einer Minimierung der Durchregenrate und der Durchtropfmenge sowie zu einer geringeren Lagerhaltung führen, was letzteres darauf zurückzuführen ist, daß das Bauteil standardisiert und auf den jeweiligen Kolonnenquerschnitt zugeschnitten werden kann.

Das erfindungsgemäße Bauelement kann aus einer einzigen Rinne mit daran befestigter Ableitplatte oder daran befestigten Ableitplatten bestehen. Vorzugsweise besteht das Bauelement aber aus wenigstens zwei und besonders mehreren parallel zueinander angeordneten Rinnen, denen jeweils eine erste und zweite Ableitplatte zugeordnet ist.

Je Rinne sind zwei übereinander geneigt angeordnete Ableitplatten vorgesehen, die gegenläufige Neigung haben, so daß die Flüssigkeit zunächst auf der oberen geneigten Platte entlangläuft, an der unteren Kante derselben auf die nächste Ableitplatte abtropft und von der Unterkante derselben in die Rinne abtropft. Im allgemeinen ist es bei dieser Ausführungsform ausreichend und im Hinblick auf eine reduzierte Einbauhöhe bevorzugt, pro Rinne nur zwei übereinander angeordnete, gegenläufig geneigte Ableitplatten vorzusehen.

Die Ableitplatten können mit den Rinnen in unterschiedlicher Weise verbunden sein. Eine konstruktiv einfache und daher bevorzugte Befestigungsweise besteht darin, daß die Einrichtungen zur Verbindung der Rinne mit der Ableitplatte und zur Lagefixierung der letzteren Träger sind, die im wesentlichen senkrecht zur Längsachse der Rinne verlaufen und an denen die Rinnen einerseits und die Ableitplatten andererseits befestigt sind. An den Enden dieser Träger sind vorzugsweise Verbindungselemente vorgesehen, mit Hilfe derer entweder die Vorrichtungen nach der Erfindung direkt an der Kolonnenwand befestigt oder mit Hilfe derer mehrere gleichartige Vorrichtungen nach der Erfindung aneinander befestigt werden können. Solche Verbindungselemente sind im allgemeinen Flansche, mit Hilfe derer eine Schraubverbindung hergestellt werden kann.

Wegen der Verwendung zweier oder mehrerer übereinander angeordneter Ableitplatten ist es zweckmäßig, wenigstens zwei Träger übereinander vorzusehen, die im wesentlichen parallel und im Abtand voneinander angeordnet sind. Die Träger können die Form von Leisten oder Platten haben.

Die Einzelteile der Vorrichtung, d. h. die Rinnen, Ableitplatten und Träger, können gegebenenfalls ganz oder teilweise einstückig geformt werden, wie durch Spritzgußverfahren.

Sie können aber auch einzeln hergestellt und zusammengesteckt und gegebenenfalls im zusammengesteckten Zustand miteinander verbunden, wie miteinander verschweißt werden.

Um den speziellen Aspekt der Aufgabenstellung einer Minimierung der Durchregenrate und der Durchtropfmenge zu bekommen, sind verschiedene zusätzliche Merkmale an der erfindungsgemäßen Vorrichtung zweckmäßig. Eines dieser Merkmale besteht darin, daß die Vorrichtung wenigstens zwei parallel zueinander angeordnete Rinnen aufweist und daß die Oberkante der jeweils einer Rinnen zugeordneten obersten Ableitplatte in einer Ebene liegt, die parallel zu der obengenannten ersten und zweiten Ebene, und zwar außerhalb dieser betreffenden Rinne, liegt und die nächst darunter liegende Ableitplatte der nächst benachbarten Rinne schneidet. Dies bedeutet folgendes:
Da die Vorrichtung je Rinne zwei übereinander liegende gegenläufig geneigte Ableitplatten besitzt, ist deren Winkelstellung und Dimensionierung so gewählt, daß von der Oberkante der obersten Ableitplatte abtropfende Flüssigkeit entweder auf die obere oder untere Ableitplatte der benachbarten Rinne auftropft. Auf diese Weise kann man ein Durchtropfen oder Durchregnen weitgehend vermeiden.

Wenn das erfindungsgemäße Bauelement nur eine einzige Rinne aufweist, wird die Neigung und Dimensionierung der Ableitplatten zweckmäßig ebenfalls so gewählt, daß beim Zusammenbau mehrerer dieser Bauelemente wiederum die von der Oberkante der obersten Ableitplatte abtropfende Flüssigkeit nicht durch die Rinnen hindurch, sondern auf eine Ableitplatte der nächst benachbarten Rinne auftropft.

Zweckmäßig liegen die Neigungswinkel der Ableitplatten zur Horizontalen generell zwischen 45° und 70°, besonders zwischen 50° und 65°.

Ein weiteres bevorzugtes Mittel zur Verhinderung eines Durchtropfens besteht darin, daß die oberen Kanten der Ableitplatten mit einer Gegenkantung versehen sind, die verhindern soll, daß Flüssigkeit über die obere Kante läuft und an der Rückseite der Ableitplatte entlangströmt. Dies wird weiterhin dadurch vermieden, daß die oberen Kanten der obersten Ableitplatten mit Abtropfnasen versehen sind, die gewöhnlich aus borstenartigen Vorsprüngen entlang der Kante und parallel zu dieser bestehen.

Eine weitere zweckmäßige Ausgestaltung des Gedankens der Erfindung sieht an der unteren Kante der untersten Ableitplatte jeder Rinne eine in die zugehörige Rinne eintauchende Ablaufschürze vor, die ein Zurückspritzen ablaufender Flüssigkeit verhindert. Auch eine solche Ablaufschürze besteht gewöhnlich aus einer entlang der Plattenkante angeordneten Leiste oder Platte.

Zur zusätzlichen Stabilisierung der Vorrichtung können zwischen übereinanderliegenden Trägern Verbindungselemente, wie Tragstäbe, vorgesehen sein, die eine Aussteifung des Bauelementes ergeben.

Bei großen Füllkörpern oder wabenartig zusammenhängenden Füllkörpereinbauten kann der Gitterrost für die Abstützung der Füllkörper allein von den Oberkanten der obersten Ableitplatten gebildet werden. Bei Verwendung kleinerer Füllkörper in Schüttung kann es dagegen zweckmäßig sein, zwischen den oberen Kanten banachbarter Ableitplatten parallel zu diesen oberen Kanten angeordnete Roststäbe vorzusehen, die zweckmäßig an den oben beschriebenen Trägern befestigt sind und so einen engeren Füllkörpertragrost ergeben.

Nach dem Einbau der erfindungsgemäßen Vorrichtung in einer Kolonne ist es zweckmäßig, an der Wand derselben eine zusätzliche Sammelrinne vorzusehen, da beim Rundschneiden keine hundertprozentige Anpassung an die Wandrundung erzielbar ist, so daß an der Wand ablaufende Flüssigkeit durchtropfen könnte. Die Anbringung einer Sammelrinne entlang der Kolonnenwand über der erfindungsgemäßen Vorrichtung ermöglicht es, an der Wand ablaufende Flüssigkeit auf die erfindungsgemäße Vorrichtung zu lenken.

Durch die Zeichnung wird die Erfindung weiter erläutert. In dieser bedeuten
- Fig.1: eine perspektivische Darstellung einer ersten Ausführungsform der Vorrichtung nach der Erfindung und
- Fig.2: einen senkrechten Schnitt durch eine zweite bevorzugte Ausführungsform der Erfindung.

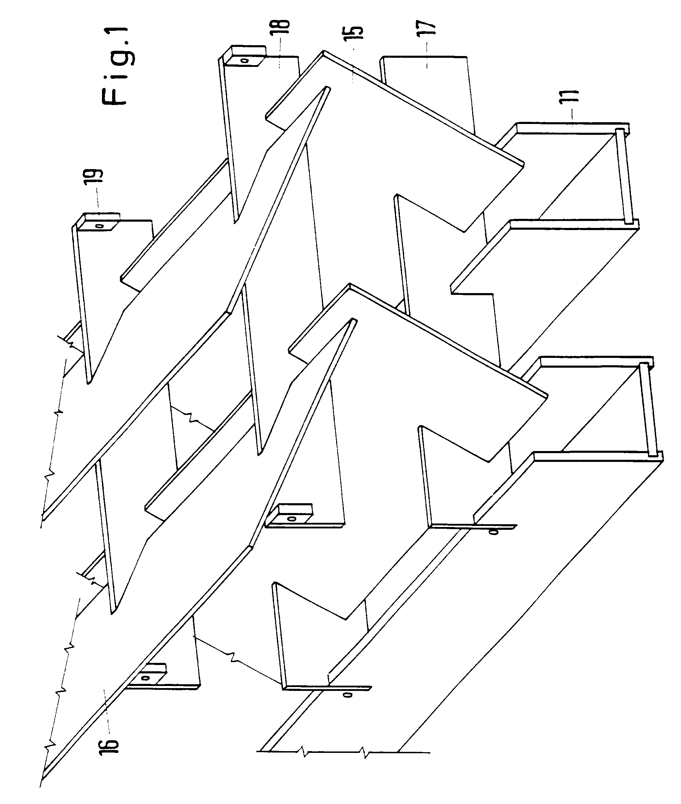

In Fig.1 ist ausschnittweise in abgebrochener Darstellung eine Ausführungsform einer Vorrichtung nach der Erfindung gezeigt. Diese besitzt in der dargestellten zwei parallele Sammelrinnen 11 ohne Wanddurchbrechungen. Mit Hilfe von Trägern 17 sind über diesen Sammelrinnen und mit den unteren Kanten in diese hineinragend erste nach rechts geneigte Ableitplatten 15 befestigt. Oberhalb dieser Ableitplatten 15 sind in entgegengesetzter Richtung geneigte Ableitplatten 16 angeordnet, wobei die Ableitplatten 15 und 16 mit Hilfe von Trägern 18 miteinander verbunden sind. An den Trägern 18 befinden sich Flansche 19 für Schraubverbindungen zwischen mehreren gleichartigen Moduln oder zur Befestigung an der Kolonnenwand.

In diesem Ausführungsbeispiel sind die unteren Ableitplatten 15 so dimensioniert und geneigt, daß von der Oberkante der oberen Ableitplatten 16 abtropfende Flüssigkeit auf die benachbarte untere Ableitplatte 15 auftropft. Die Ableitplatten 16 stehen etwa senkrecht zu den Ableitplatten 15. Die auf die obere Fläche der Ableitplatten 16 aus der Füllkörperschüttung auftreffende Flüssigkeit läuft auf der oberen Fläche der Ableitplatte 16 bis zu deren unterer Kante und tropft dort durch den Schlitz zwischen den Ableitplatten 15 und 16 auf die Oberseite der unteren Ableitplatte 15, wo sie zu deren Unterkante abläuft und von dort in die Rinnen 11 abtropft.

Die Oberkanten der Ableitplatten 16 bilden den Füllkörpertragrost, der die Füllkörperschüttung unterstützt.

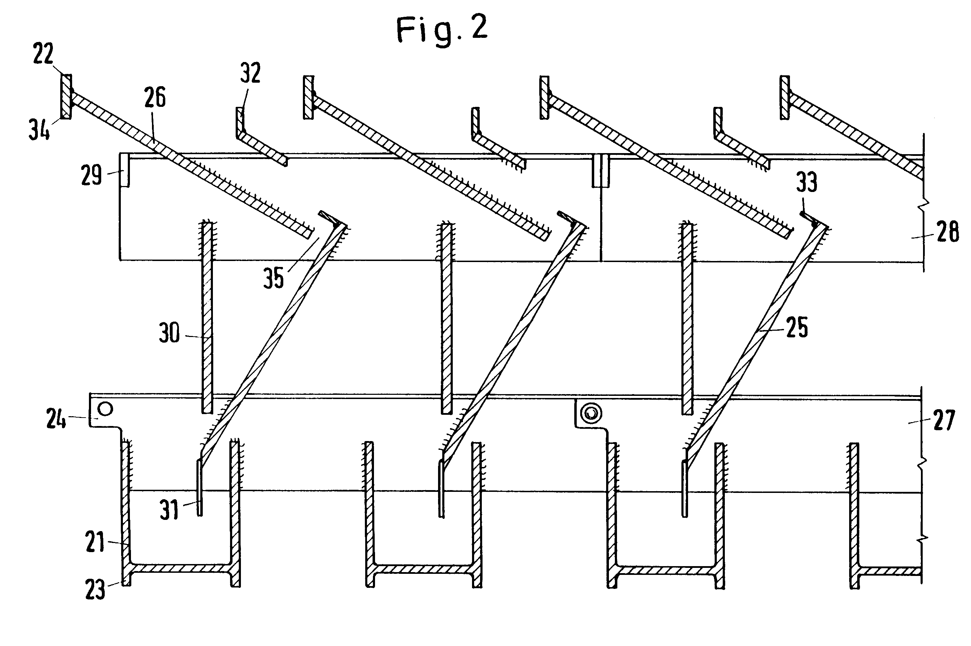

Die Fig.2 der Zeichnung zeigt in senkrechtem Schnitt eine bevorzugte Ausführungsform einer Vorrichtung nach der Erfindung. Diese besitzt mehrere parallel nebeneinander angeordnete Verteilerrinnen 21 mit nicht gezeigten seitlichen Öffnungen zum Flüssigkeitsaustritt sowie mit Ablaufspitzen 23. Mit Hilfe eines Trägers 27, der mittels Schraubverbindungen und Flanschen 24 aus mehreren gleichen Einzelteilen aufgebaut ist, sind die Rinnen 21 mit den in der Abbildung nach rechts geneigten Ableitplatten 25 verbunden. Am oberen Ende sind die Ableitplatten 25 mit einem ebenfalls aus mehreren Stücken zusammengesetzten Träger 28 verbunden, mit dem auch die oberen Ableitplatten 26 verbunden sind. Die Verbindungsflansche sind bei dem oberen Träger 28 mit 29 bezeichnet.

Die Ableitplatten 26 stehen etwa senkrecht zu den Ableitplatten 25. Ihre Unterkante befindet sich im Abstand von der oberen Fläche der benachbarten Ableitplatte 25, so daß ein Durchtrittsschlitz 35 vorhanden ist.

Um ein Ablaufen der Flüssigkeit an der Rückseite der oberen Ableitplatte 26 zu verhindern, besitzt diese an ihrem oberen Rand eine Gegenkantung 22 und eine Abtropfnase 34. Zum gleichen Zweck ist die obere Kante der unteren Ableitplatte 25 mit einer Gegenkantung 33 versehen. An der unteren Kante der Ableitplatte 25, die in die Rinne 21 hineinragt, ist eine Ablaufschürze 31 befestigt, die ein Zurückspritzen der ablaufenden Flüssigkeit verhindert.

An dem oberen Träger 28 sind zwischen den Ableitplatten 26 noch jeweils in gleicher Richtung laufende Roststäbe 32 befestigt, um den Füllkörpertragrost, der in diesem Fall sowohl von den Gegenkantungen 22 der Ableitplatten 26 als auch von den Roststäben 32 gebildet wird, enger zu machen und ein Durchfallen von Füllkörpern zu verhindern.

Wie in Fig.2 besonders deutlich gezeigt ist, ist die Neigung und Dimensionierung der Ableitplatten derart, daß die unteren Ableitplatten 25 die benachbarten oberen Ableitplatten 26 jeweils untergreifen, so daß die Durchregenrate minimiert wird. Von oben aus der Füllkörperschüttung auf die Oberseite der Ableitplatten 26 gelangende Flüssigkeit fließt auf der Oberseite der Ableitplatten 26 bis zu dem Durchtrittsschlitz 35 und von dort auf die obere Seite der Ableitplatten 25. Durch die Gegenkantungen 22 und 33 wird weitgehend verhindert, daß Flüssigkeit auf der Rückseite der Ableitplatten entlangfließt. Doch über die Gegenkantung 22 tretende Flüssigkeit tropft an den Abtropfnasen 34 auf die nächst folgende Ableitplatte 26 ab. Am unteren Ende der Ableitplatte 25 gelangt die Flüssigkeit über die Ablaufschürze 31 in die Rinne 21.

Zur Versteifung der Konstruktion sind die Träger 27 und 28 mit Hilfe von Trag- oder Versteifungsstäben 30 miteinander verbunden, so daß ein festes Tragegerüst für die Einzelelemente entsteht.

## Patentansprüche

1. Vorrichtung zum Sammeln oder Verteilen von Flüssigkeit in einem Stoff- oder Wärmeaustauschbehälter, die zum Tragen vom Füllkörpern geeignet ist, mit wenigstens einer Rinne (11, 21) zum Sammeln oder Verteilen von Flüssigkeit und je Rinne einer im wesentlichen parallel zu ihr, schräg zu einer ersten Ebene, die durch die senkrechte Mittelebene der Rinne (11, 21) zwischen den beiden freien Kanten der Rinne gebildet ist, angeordneten ersten Ableitplatte (15, 25), wobei die Ableitplatte (15, 25) mit der Rinne (11, 21) verbunden und in ihrer Lage fixiert ist, wobei die Unterkante der ersten Ableitplatte (15, 25) in oder unmittelbar über der Rinnenöffnung angeordnet ist und wobei die Oberkante dieser Ableitplatte (15, 25) über eine zweite Ebene hinausragt, die parallel zur ersten Ebene liegt und durch die unter dieser Ableitplatte liegende freie Kante der Rinne (11, 21) geht, **dadurch gekennzeichnet**, daß je Rinne (11, 21) jeweils über der ersten Ableitplatte (15, 25) eine zweite geneigte Ableitplatte (16, 26) mit gegenläufiger Neigung angeordnet ist, wobei die zweite Ableitplatte (16, 26) jeweils die ihrer Oberkante benachbarte erste Ableitplatte (15, 25) übergreift und die erste Ableitplatte (15, 25) so dimensioniert und geneigt ist, daß von der Oberkante der zweiten Ableitplatte (16, 26) abtropfende Flüssigkeit auf die benachbarte untere Ableitplatte abtropft.

2. Vorrichtung nach Anspruch 1, **dadurch gekennzeichnet**, daß die Einrichtungen zur Verbindung der Rinne (11, 21) mit der ersten Ableitplatte (15, 25) und zur Lagefixierung der letzteren Träger (17, 27) sind, die im wesentlichen senkrecht zur Längsachse der Rinnen (11, 21) verlaufen und an denen die Rinnen (11, 21) einerseits und die Ableitplatten (15, 25) andererseits befestigt sind.

3. Vorrichtung nach Anspruch 2, **dadurch gekennzeichnet**, daß wenigstens zwei Träger (17, 18; 27, 28) im wesentlichen parallel zueinander, im Abstand übereinander angeordnet sind.

4. Vorrichtung nach einem der Ansprüche 2 und 3, **dadurch gekennzeichnet**, daß die Träger durch Verbindungselemente (30) miteinander verbunden und im Abstand voneinander gehalten werden.

5. Vorrichtung nach einem der Ansprüche 2 bis 4, **dadurch gekennzeichnet**, daß die Träger (17, 18; 27, 28) an ihren Enden mit Verbindungselementen (19, 24, 29) versehen sind.

6. Vorrichtung nach einem der Ansprüche 1 bis 5, **dadurch gekennzeichnet**, daß sie wenigstens zwei Rinnen (11, 21) parallel zueinander aufweist und die Oberkante der zweiten Ableitplatte (16, 26) in einer Ebene liegt, die parallel zur ersten und zweiten Ebene außerhalb der dieser Ableitplatte zugeordneten Rinne (11, 21) liegt und die nächst darunterliegende erste Ableitplatte (15, 25) der nächstbenachbarten Rinne schneidet.

7. Vorrichtung nach einem der Ansprüche 1 bis 6, **dadurch gekennzeichnet**, daß die Kanten der Ableitplatten (25, 26) mit einer Gegenkantung (22, 33) versehen sind.

8. Vorrichtung nach einem der Ansprüche 1 bis 7, **dadurch gekennzeichnet**, daß die oberen Kanten der zweiten Ableitplatten (26) mit einer Abtropfnase (34) versehen sind.

9. Vorrichtung nach einem der Ansprüche 1 bis 8, **dadurch gekennzeichnet**, daß die untere Kante der ersten Ableitplatten (25) mit einer in die zugehörige Rinne (21) eintauchenden Ablaufschürze (31) versehen ist.

10. Vorrichtung nach einem der Ansprüche 1 bis 9, **dadurch gekennzeichnet**, daß zwischen den oberen Kanten benachbarter Ableitplatten (26) parallel zu diesen oberen Kanten angeordnete Roststäbe (32) angeordnet und vorzugsweise an den Trägern (28) befestigt sind.

11. Vorrichtung nach einem der Ansprüche 1 bis 10, **dadurch gekennzeichnet**, daß die Rinne (21) eine Verteilerrinne mit seitlichen Öffnungen ist.

12. Vorrichtung nach einem der Ansprüche 1 bis 10, **dadurch gekennzeichnet**, daß die Rinne (11) eine vollwandige Sammelrinne ist.

13. Vorrichtung nach einem der Ansprüche 1 bis 12, **dadurch gekennzeichnet**, daß der Neigungswinkel der ersten Ableitplatten (15, 25) zur Horizontalen im Bereich von 45° bis 70°, vorzugsweise 50° bis 60° liegt und daß die zweiten Ableitplatten (16, 26) im wesentlichen senkrecht zu den ersten Ableitplatten (15, 25) stehen.

## Claims

1. Apparatus for collection or distribution of liquid in a mass or heat exchange vessel which can hold a column packing, comprising at least one channel (11, 21) for collection or distribution of liquid, each channel being associated with a first deflection plate (15, 25) mounted substantially parallel to the channel and inclined to a first plane passing through the vertical central plane of the channel (11, 21) between the two free edges thereof, wherein the deflection plate (15, 25) is connected to the channel (11, 21) and fixed in position, wherein the lower edge of the first deflection plate (15, 25) is located in or directly over the channel opening and wherein the upper edge of said deflection plate (15, 25) extends over a second plane which is parallel to the first plane and passes through the free edge of the channel (11, 21) located beneath said deflection plate, characterised in that each channel (11, 21) is associated with a second inclined deflection plate (16, 26) located above the first deflection plate (15, 25) and inclined in the opposite direction thereto, wherein the second deflection plate (16, 26) extends over the first deflection plate (15, 25) adjacent the upper edge of the second deflection plate and in that the first deflection plate is so dimensioned and inclined that liquid dripping from the upper edge of the second deflection plate (16, 26) drops onto the next adjacent lower deflection plate.

2. Apparatus according to claim 1, characterised in that the means for connecting the channel (11, 21) with the first deflection plate (15, 25) and for fixing the latter in position consists of beams (17, 27) located substantially at right angles to the longitudinal axes of the channels (11, 21) to which the channels (11, 21) and the deflection plates (15, 25) are fixed.

3. Apparatus according to claim 2, characterised in that at least two beams (17, 18; 27, 28) are provided, located substantially parallel to and spaced apart from each other.

4. Apparatus according to claim 2 or claim 3, characterised in that the beams are connected together and spaced apart from each other by connecting elements (30).

5. Apparatus according to any one of claims 2 to 4, characterised in that the beams (17, 18; 27, 28) are provided at their ends with connecting elements (19, 24, 29).

6. Apparatus according to any one of claims 1 to 5, characterised in that it comprises at least two parallel channels (11, 21) and in that the upper edge of the second deflection plate (16, 26) lies in a plane which is parallel to said first and second planes and outside the channel (11, 21) associated with said deflection plate and passes through the immediately subjacent first deflection plate (15, 25) of the immediately adjacent channel.

7. Apparatus according to any one of claims 1 to 6, characterised in that the edges of the deflection plates (25, 26) are provided with an angled edge (22, 33).

8. Apparatus according to any one of claims 1 to 7, characterised in that the upper edges of the second deflection plates (26) are provided with a drainage lug (34).

9. Apparatus according to any one of claims 1 to 8, characterised in that the lower edge of the first deflection plate (25) is provided with a runoff apron (31) which dips into the associated channel (21).

10. Apparatus according to any one of claims 1 to 9, characterised in that grid rods (32) are provided between and parallel to the upper edges of adjacent deflection plates (26) and preferably fixed to the beams (28).

11. Apparatus according to any one of claims 1 to 10, characterised in that the channel (21) is a distribution channel having lateral openings.

12. Apparatus according to any one of claims 1 to 10, characterised in that the channel (11) is a solid walled collection channel.

13. Apparatus according to any one of claims 1 to 12, characterised in that the first deflection plate (15, 25) is inclined at an angle of about 45° to 70°, preferably 50° to 60° to the horizontal and in that the second deflection plate (16, 26) is substantially perpendicular to the first deflection plate (15, 25).

## Revendications

1. Dispositif pour collecter ou distribuer du liquide dans un réservoir d'échange de matière ou de chaleur, et adapté à porter des corps de remplissage, le dispositif comportant au moins une goulotte (11, 21) pour collecter et distribuer du liquide, ainsi que pour chacune de ces goulottes, une première plaque déflectrice (15, 25) disposée sensiblement de manière parallèle à la goulotte et de façon inclinée par rapport à un premier plan qui est formé par le plan médian vertical de la goulotte (11, 21) entre les deux bords libres de la goulotte, la plaque déflectrice (15, 25) étant reliée à la goulotte (11, 21) et fixée en position, le bord inférieur de la première plaque déflectrice (15, 25) étant disposé dans ou directement au-dessus de l'ouverture de goulotte, et le bord supérieur de cette plaque déflectrice (15, 25) faisant saillie au-delà d'un second plan qui est disposé parallèlement au premier plan et qui passe par le bord libre de la goulotte (11, 21), se situant sous cette plaque déflectrice, caractérisé en ce que pour chaque goulotte (11, 21), au-dessus de la première plaque déflectrice correspondante (15, 25), est disposée une seconde plaque déflectrice (16, 26) inclinée et présentant une inclinaison de sens opposé, la seconde plaque déflectrice (16, 26) chevauchant par le dessus la première plaque déflectrice (15, 25) voisine de son bord supérieur, et la première plaque déflectrice (15, 25) étant dimensionnée et inclinée de manière telle, que du liquide s'égouttant du bord supérieur de la seconde plaque déflectrice (16, 26), s'égoutte sur la plaque déflectrice inférieure voisine.

2. Dispositif selon la revendication 1, caractérisé en ce que les dispositifs destinés à réaliser la liaison de la goulotte (11, 21) à la première plaque déflectrice (15, 25) et pour assurer la fixation en position de cette dernière, sont constitués par des longerons de support (17, 27), qui s'étendent sensiblement de manière perpendiculaire à l'axe longitudinal des goulottes (11, 21) et sur lesquels sont fixées les goulottes (11, 21) d'une part, et les plaques déflectrices (15, 25) d'autre part.

3. Dispositif selon la revendication 2, caractérisé en ce qu'au moins deux longerons de support (17, 18; 27, 28) sont disposés sensiblement de manière parallèle, et à distance l'un au-dessus de l'autre.

4. Dispositif selon l'une des revendications 2 et 3, caractérisé en ce que les longerons de support sont reliés entre-eux et maintenus à distance les uns des autres, au moyen d'éléments de liaison (30).

5. Dispositif selon l'une des revendications 2 à 4, caractérisé en ce que les longerons de support (17, 18; 27, 28) sont munis, à leurs extrémités, d'éléments de liaison (19, 24, 29).

6. Dispositif selon l'une des revendications 1 à 5, caractérisé en ce qu'il présente au moins deux goulottes (11, 21) parallèles l'une à l'autre, et en ce que le bord supérieur de la seconde plaque déflectrice (16, 26) se trouve dans un plan, qui est parallèle au premier et au second plan et situé en-dehors de la goulotte (11, 21) associée à cette plaque déflectrice, et qui coupe la première plaque déflectrice (15, 25) suivante, située en-dessous, et correspondant à la goulotte immédiatement voisine.

7. Dispositif selon l'une des revendications 1 à 6, caractérisé en ce que les bords des plaques déflectrices (25, 26) sont pourvus d'une bordure conjuguée (22, 33).

8. Dispositif selon l'une des revendications 1 à 7, caractérisé en ce que les bords supérieurs des secondes plaques déflectrices (26) sont pourvus d'un talon d'égouttage (34).

9. Dispositif selon l'une des revendications 1 à 8, caractérisé en ce que le bord inférieur des premières plaques déflectrices (25) est pourvu d'un tablier d'écoulement (31) plongeant dans la goulotte (21) associée.

10. Dispositif selon l'une des revendications 1 à 9, caractérisé en ce qu'entre les bords supérieurs de plaques déflectrices (26) voisines, sont disposées, parallèlement à ces bords supérieurs, des barres de grille (32), qui sont de préférence fixées sur les longerons de support (28).

11. Dispositif selon l'une des revendications 1 à 10, caractérisé en ce que la goulotte (21) est une goulotte de distribution comportant des ouvertures latérales.

12. Dispositif selon l'une des revendications 1 à 10, caractérisé en ce que la goulotte (11) est une goulotte de collecte à paroi continue.

13. Dispositif selon l'une des revendications 1 à 12, caractérisé en ce que l'angle d'inclinaison des premières plaques déflectrice (15, 25), par rapport à l'horizontale, se situe dans une plage allant de 45° à 70° de préférence de 50° à 60°, et en ce que les secondes plaques déflectrices (16, 26) sont sensiblement perpendiculaires aux premières plaques déflectrices (15, 25).
